# EUROPÄISCHE PATENTSCHRIFT

(11) **EP 1 382 894 B1**
(45) Veröffentlichungstag und Bekanntmachung des Hinweises auf die Patenterteilung: **19.08.2009**
(21) Anmeldenummer: 03009688.7
(22) Anmeldetag: 30.04.2003
(51) Int. Cl.: F16L 5/02, F16L 5/06, F16L 5/08

(54) **Vorrichtung zur Wanddurchführung von Rohrleitungen, Schläuchen oder elektrischen Kabeln für Kraftfahrzeuge**
Wall feedthrough for pipes, hoses or electric cables for motor vehicles
Traversée de paroi pour conduites, tuyaux flexibles ou câbles électriques pour vehicules automobiles

(30) Priorität: 20.07.2002 DE 10233127
(43) Veröffentlichungstag der Anmeldung: 21.01.2004
(73) Patentinhaber: Dr. Ing. h.c. F. Porsche Aktiengesellschaft, 70435 Stuttgart (DE)
(72) Erfinder: Eberle, Wilfried, 89584 Ehingen (DE); Klatte, Heiner, 49401 Damme (DE)

(56) Entgegenhaltungen:
- DE-A- 3 226 475
- US-A- 4 482 172

## Beschreibung

Die Erfindung betrifft eine Vorrichtung zur Wanddurchführung von Rohrleitungen, Schläuchen oder elektrischen Kabeln - nachfolgend zusammenfassend als Leitungen bezeichnet - für Kraftfahrzeuge nach dem Oberbegriff des Patentanspruches 1.

Aus der DE 32 26 475 A1 ist bereits eine abdichtende Wanddurchführung für Rohrleitungen, Schläuche oder elektrische Kabel für Kraftfahrzeuge bekannt, bei der in den Leitungen Leitungskupplungen vorgesehen sind. Jeweils eine erste Kupplungshälfte dieser Leitungskupplungen ist in einer Abdeckplatte verdrehsicher und abdichtend festlegbar, die hierzu mit entsprechenden Durchgangsöffnungen versehen ist, in denen die ersten Kupplungshälften oder Blindstopfen verrastend gehalten sind. Auf diese Weise lassen sich auch Bündel von Leitungen abgedichtet durch eine Wandung der Karosserie hindurchführen. Außerdem ist die Montage der Leitungen vereinfacht, da diese vormontiert, angeschlossen und geprüft werden können.

Ausgehend von diesem Stand der Technik liegt der Erfindung die Aufgabe zugrunde, eine Vorrichtung zur Wanddurchführung von Rohrleitungen, Schläuchen oder elektrischen Kabeln zu schaffen, die hinsichtlich ihrer Montage weiter vereinfacht ist.

Diese Aufgabe wird erfindungsgemäß mit den Merkmale des Patentanspruches 1 gelöst. Erfindungsgemäß wird vorgeschlagen, die ersten Kupplungshälften der Leitungskupplungen jeweils durch einen Halter in wenigstens eine Gruppe zu wenigstens zwei ersten Kupplungshälften zusammenzufassen und die derart gebündelten Kupplungshälften in Stopfen zu halten, die in Öffnungen einer Wandung angeordnet sind. Durch die Zusammenfassung der ersten Kupplungshälften mit Hilfe des Halters kann ein in das Fahrzeug einzubauendes Modul einschließlich seiner Leitungen außerhalb des Fahrzeuges vormontiert, geprüft und zur Montage vorbereitet werden. Durch die Gruppierung der Kupplungshälften sind diese Arbeiten wie auch die nachfolgende Montage der Kupplungshälften in die Wandöffnungen erleichtert. Die Montage der Kupplungshälften in die Wandöffnungen ist insbesondere dann erleichtert, wenn kein Sichtkontakt zu den Wandöffnungen bei der Montage der Leitungen möglich ist. Dadurch, dass für jede Kupplungshälfte eine eigene Öffnung in der Wandung der Karosserie angebracht ist, ist diese Öffnung in der Regel als kreisförmige Öffnung einfach anzubringen, gut abdichtbar und im übrigen an unterschiedliche Fahrzeugvarianten mit einer unterschiedlichen Zahl von Leitungen einfach anzupassen. Erfindungsgemäß sind die Stopfen mit einem Absatz versehen, der mit einem an der ersten Kupplungshälfte vorgesehenen Vorsprung rastend zusammenwirkt. Derart sind außer dem Stopfen keine weiteren Mittel erforderlich, um die ersten Kupplungshälften in der Wandungsöffnung sicher und abgedichtet festzulegen.

Erfindungsgemäße Weiterbildungen der Erfindung sind in den Unteransprüchen beschrieben.

So wird vorgeschlagen, dass die Stopfen aus gummielastischem Material bestehen und in Gruppen zusammengefasst sind. Durch die Verwendung des gummielastischen Materiales werden die Kupplungshälften in vorteilhafter Weise schwingungstechnisch gegenüber der Wandung isoliert, so dass die Leitungen gegenüber der Karosserie des Fahrzeuges schwingungsentkoppelt gehalten und durch die Wandung hindurchgeführt sind. Druckschwankungen und andere Schwingungen in den Leitungen führen damit nicht mehr zu einer Schwingungsanregung der Wandung, die im Innenraum des Fahrzeuges deutlich zu hören wären. Durch das Zusammenfassen der Stopfen in Gruppen werden Herstellung und Montage des Stopfen vereinfacht, da alle für eine Wanddurchführung benötigten Stopfen zu einem Teil zusammengefasst werden können. Gleichzeitig aber bleibt die Einzelabdichtung jeder Kupplungshälfte dadurch gewährleistet, dass in jeder Wandöffnung ein separater Stopfen vorgesehen ist.

Schließlich wird vorgeschlagen, zur Verbindung der ersten Kupplungshälften mit dem Halter einen Sprengring vorzusehen, der in eine außenseits an der ersten Kupplungshälfte angebrachten Nut eingelegt ist. Korrespondierend zu dieser ersten Nut ist in den Öffnungen, die im Halter zur Aufnahme der ersten Kupplungshälfte vorgesehen sind, jeweils eine zweite Nut angebracht. Wenn die erste Kupplungshälfte in die Öffnung eingeschoben wird, wird der Sprengring zunächst zusammengedrückt. Erreicht die erste Kupplungshälfte ihre endgültige Position, so kann sich der Sprengring wieder ausdehnen und in die zweite Nut eingreifen. Dadurch, dass der Sprengring nun zwischen erster Nut und zweiter Nut zu liegen kommt, ist die erste Kupplungshälfte mit dem Halter verbunden.

Insbesondere dann, wenn die beiden Kupplungshälften der Leitungskupplung durch Schrauben miteinander verbunden werden sollen, ist es notwendig die ersten Kupplungshälften im Halter verdrehgesichert zu halten. Dazu sind die ersten Kupplungshälften beispielsweise mit einem Sechskant oder Abflachungen versehen, die sich dann an korrespondierenden Anlageflächen an der Halterung abstützen.

Die Erfindung ist nachstehend anhand des in den Figuren dargestellten Ausführungsbeispieles näher erläutert.

Es zeigen:
- Fig. 1: eine Vorderansicht einer erfindungsgemäßen Vorrichtung zur Wanddurchführung,
- Fig. 2: eine Rückansicht der Vorrichtung zur Wanddurchführung,
- Fig. 3: einen Schnitt nach der Ebene X der Fig. 1,
- Fig. 4: eine Explosionsdarstellung der Vorrichtung zur Wanddurchführung ohne Wandung,
- Fig. 5: eine Aufsicht auf einen Sprengring,
- Fig. 6: ein zweites Ausführungsbeispiel der Vorrichtung zur Wanddurchführung,
- Fig. 7: einen Hauptschnitt zu Fig. 6,
- Fig. 8: eine Explosionsdarstellung von oben zu Fig. 6, und
- Fig. 9: eine Explosionsdarstellung von unten zu Fig. 6.

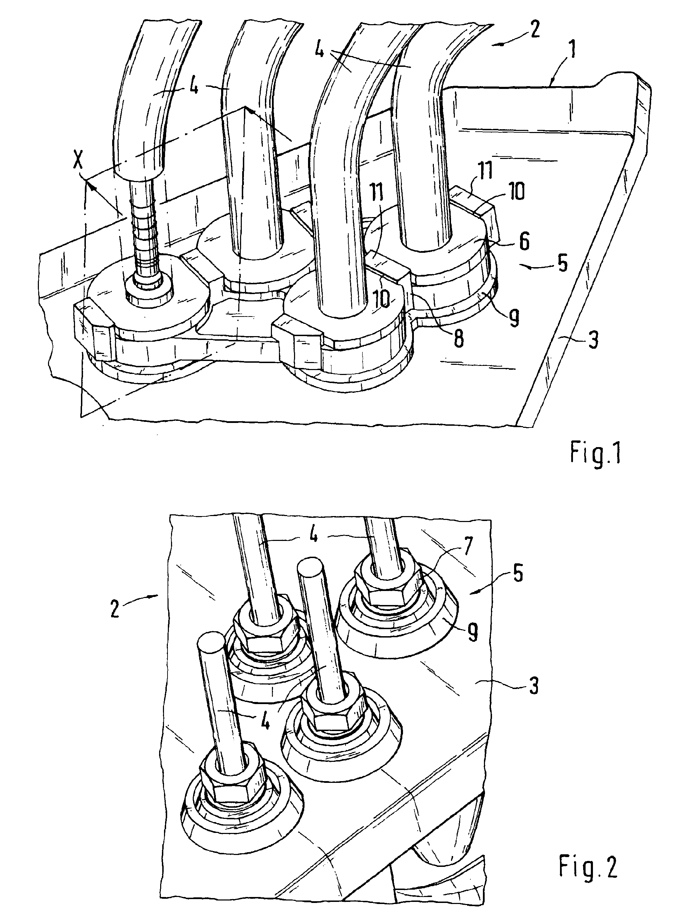

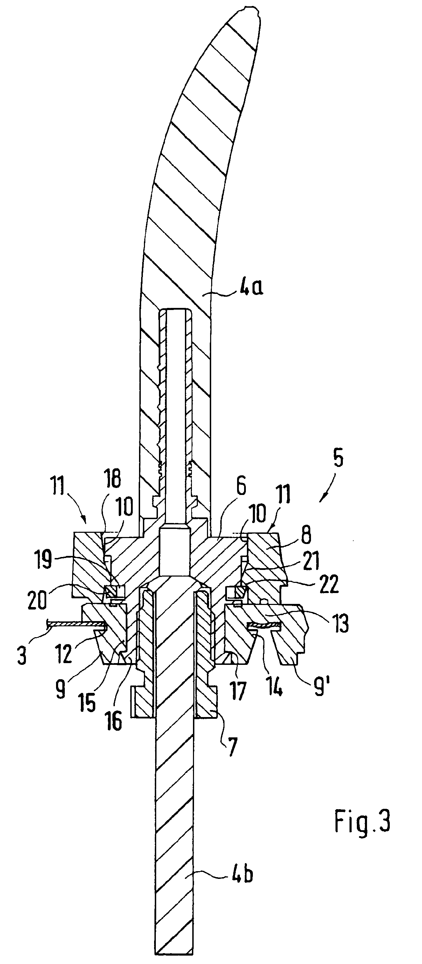

Die in Fig. 1 gezeigte Vorrichtung zur Wanddurchführung dient zur Durchführung eines Bündels 2 von Leitungen 4, hier Hydraulikleitungen, durch eine Wandung 3 einer Karosserie eines nicht näher gezeigten Kraftfahrzeuges. Die Leitungen 4 sind mit Leitungskupplungen 5 versehen, die jeweils aus einer ersten Kupplungshälfte 6 und einer zweiten Kupplungshälfte 7 bestehen. Abschnitte 4a, 4b der Leitungen 4 sind jeweils mit den Kupplungshälften 6, 7 verbunden. Die ersten Kupplungshälften 6 sind durch einen Halter 8 zusammengefasst. Die ersten Kupplungshälften 6 sind in der Wandung 3 durch gummielastischen Stopfen 9 dichtend und schwingungsisoliert gehalten. Für jede der Leitungskupplungen 5 ist ein eigener Stopfen 9 vorgesehen, der jeweils in einer eigenen Öffnung 12 (siehe Fig. 3) in der Wandung 3 gehalten ist. Die ersten Kupplungshälften 6 sind seitlich mit Abflachungen 10 versehen, die zwischen Vorsprüngen 11 des Halters 8 aufgenommen sind, so dass die ersten Kupplungshälften 6 im Halter 8 verdrehsicher gehalten sind.

Fig. 3 zeigt eine Leitung 4 mit einer Leitungskupplung 5 im montierten Zustand im Schnitt. Der erste Abschnitt 4a der Leitung 4 - hier ein Schlauchabschnitt - ist mit der ersten Kupplungshälfte 6 durch Aufstecken verbunden. Der zweite Abschnitt 4b der Leitung 4 - hier ein Rohrabschnitt - ist durch die zweite Kupplungshälfte 7, die im vorliegenden Beispiel als Überwurfmutter ausgebildet ist, mit der ersten Kupplungshälfte 6 verbunden.

Die Wandung 3 weist Öffnungen 12 auf, von denen hier nur eine einzige beispielhaft dargestellt ist. In der Öffnung 12 ist der Stopfen 9 eingeknöpft, der mit dem benachbarten Stopfen 9' aus Gründen der Montageerleichterung über einen Steg 13 verbunden ist. Der Stopfen 9 ist durch eine umlaufende Nase 14, die die Öffnung 12 hintergreift, in der Öffnung 12 gehalten.

Die erste Kupplungshälfte 6 ist mit einem zylindrischen Bereich 15 so im Stopfen 9 aufgenommen, dass der Stopfen 9 eine Dichtung zwischen der Wandung 3 und der ersten Kupplungshälfte 6 bildet. Endseits des zylindrischen Bereiches 15 ist eine umlaufende Nase 16 vorgesehen, die einen im Stopfen vorgesehenen Absatz 17 hintergreift. Auf diese Weise ist die erste Kupplungshälfte 6 rastend im Stopfen 9 gehalten.

Der Halter 8 ist ausschließlich mit der ersten Kupplungshälfte 6 verbunden und weist eine Öffnung 18 zur Aufnahme der ersten Kupplungshälfte 6 auf. Am Rand der Öffnung 18 sind die Vorsprünge 11 ausgeformt, die die Abflachungen 10 der ersten Kupplungshälfte 6 abstützen und damit die erste Kupplungshälfte 6 gegen Verdrehen sichern.

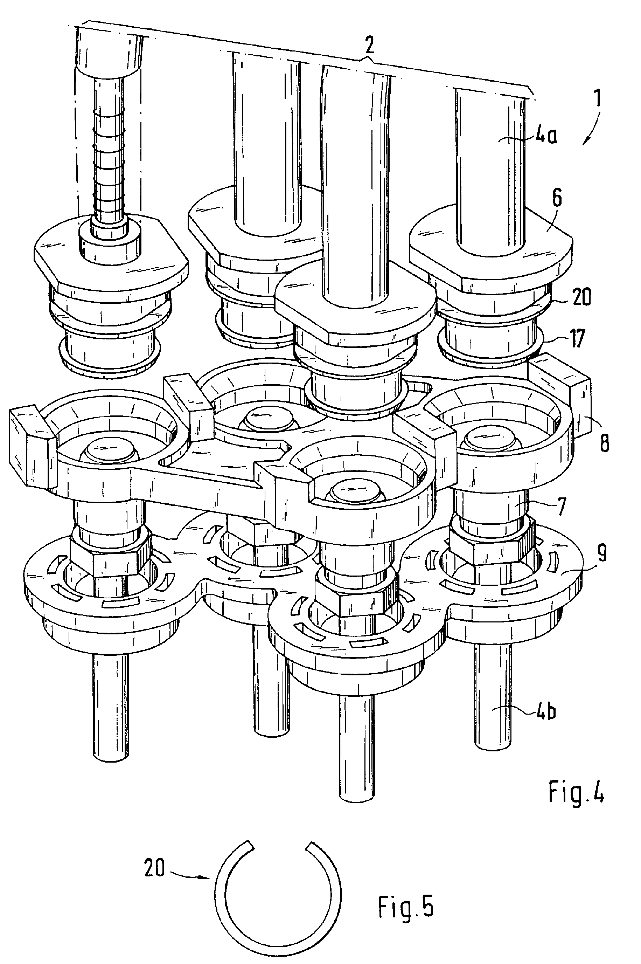

Zur Verriegelung der ersten Kupplungshälfte 6 im Halter 8 ist in die erste Kupplungshälfte 6 eine umlaufende Nut 19 eingearbeitet, in die ein Sprengring 20 eingelegt ist. Der Sprengring 20 (in Fig. 5 in Aufsicht dargestellt) besteht aus einem federnden Material und weist eine Lücke auf. Beim Einschieben der ersten Kupplungshälfte 6 in die Öffnung 18 des Halters 8 wird der Sprengring 20 unterstützt von einer Schräge 21 in der Öffnung 18 zusammengedrückt und in die Nut 19 gepresst. Erreicht die erste Kupplungshälfte 6 im Halter 8 ihre Endposition, so kann der Sprengring 20 sich wieder ausdehnen und einen Absatz 22 hintergreifen, der endseits der Öffnung 18 vorgesehen ist. In dieser Position verbindet der Sprengring 20 die erste Kupplungshälfte 6 und den Halter 8 durch Formschluss. Im dargestellten Beispiel ist der Sprengring 18 außenseits korrespondierend zur Schräge 21 angeschrägt, um das Einführen der Kupplungshälfte 6 und das damit verbundene Zusammenpressen des Sprengringes 20 zu erleichtern.

Fig. 4 zeigt die einzelnen Komponenten der Wanddurchführung 1 ohne die Wandung 3 nochmals im Überblick in einer Explosionsdarstellung.

Zur Montage werden zunächst die Teile 4a der Leitungen mit den ersten Kupplungshälften 6 versehen. Die ersten Kupplungshälften 6 werden dann soweit in den Halter 8 eingedrückt, bis die Sprengringe 20 verrasten. Das Rohrbündel ist nun endseits durch den Halter 8 zu einer Einheit zusammen gefasst. Unabhängig hiervon werden die Stopfen 9 in Öffnungen 12 der Wandung 3 eingeknöpft.

Die eigentliche Montage des Rohrbündels 2 erfolgt nun in der Weise, dass die durch den Halter 8 zusammengefassten ersten Kupplungshälften 6 in die jeweiligen Stopfen 9 so weit eingedrückt werden, bis sie dort mit ihrem umlaufenden Vorsprung 17 verrasten. Von der anderen Seite der Wandung 3 kann nun in einem späteren Arbeitsschritt die zweiten Teilstücke 4b montiert werden, in dem die zweite Kupplungshälfte 7 in der ersten Kupplungshälfte 6 befestigt wird.

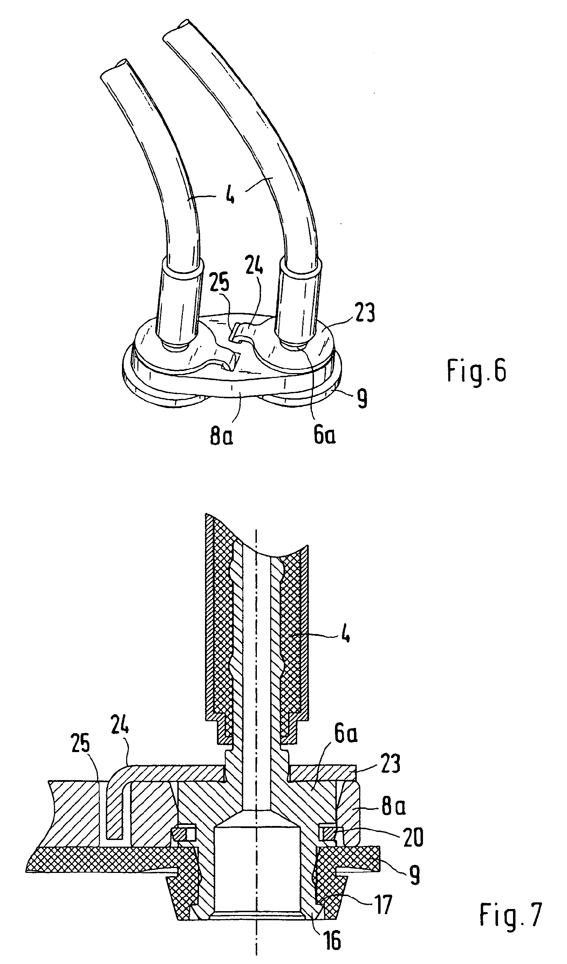

Fig. 6 zeigt ein zweites Ausführungsbeispiel der Vorrichtung zur Wanddurchführung der Leitungen 4 durch eine hier nicht dargestellte Wandung einer Karosserie eines Kraftfahrzeuges. Die Leitungen 4 sind wiederum mit Leitungskupplungen versehen, von der hier nur die ersten Kupplungshälften 6a gezeigt sind. lm Unterschied zum ersten Ausführungsbeispiel sind hier zwei erste Kupplungshälften 6 sind durch den einen Halter 8a zu einer Gruppe zusammengefasst; insgesamt sind 2 Halter 8a notwendig, um ein aus vier Leitungen 4 bestehendes Leitungsbündel in Gruppen von Leitungen 4 zusammenzufassen.

Wie im ersten Ausführungsbeispiel sind die ersten Kupplungshälften 6a in der Wandung durch gummielastischen Stopfen 9 dichtend und schwingungsisoliert gehalten, die im vorliegenden Ausführungsbeispiel korrespondierend zu den ersten Kupplungshälften 6a ebenfalls in einer Gruppe zu zwei Stopfen 9 zusammengefasst sind. Es besteht keine Notwendigkeit, dass die Gruppen von ersten Kupplungshälften 6a dieselbe Anzahl aufweist wie die Gruppe von Stopfen 9; die Gruppengröße orientiert sind vielmehr an den Gegebenheiten bei der Montage der jeweiligen Bauteile.

An den ersten Kupplungshälften 6a sind zur Verdrehsicherung Für jede der Leitungskupplungen 5 ist ein eigener Stopfen 9 vorgesehen, der jeweils in einer eigenen Öffnung 12 (siehe Fig. 3) in der Wandung 3 gehalten ist. An den ersten Kupplungshälften 6a sind Scheiben 23 beispielsweise durch Löten drehfest gehalten, wobei die Scheiben 23 jeweils eine Nase 24 tragen. Jede Nase 24 greift in eine entsprechende Ausnehmung 25 ein, die im Halter 8a vorgesehen ist, so dass die ersten Kupplungshälften 6a im Halter 8a verdrehsicher gehalten sind.

Fig. 7 stellt einen Hauptschnitt durch eine der ersten Kupplungshälften 6a des zweiten Ausführungsbeispieles dar. Deutlich zu erkennen ist, dass die Nase 24 in die Ausnehmung 25 eingreift. Der weitere Aufbau der Kupplungshälften 6a entspricht dem ersten Ausführungsbeispiel, insbesondere die Verrastung der Kupplungshälften 6a im Halter 8a mit Hilfe des Sprengringes 20 und die Verrastung der Kupplungshälften 6a im Stopfen 9 durch an den Kupplungshälften 6a ausgebildete umlaufende Nasen 16, die einen im Stopfen 9 vorgesehenen Absatz 17 hintergreifen.

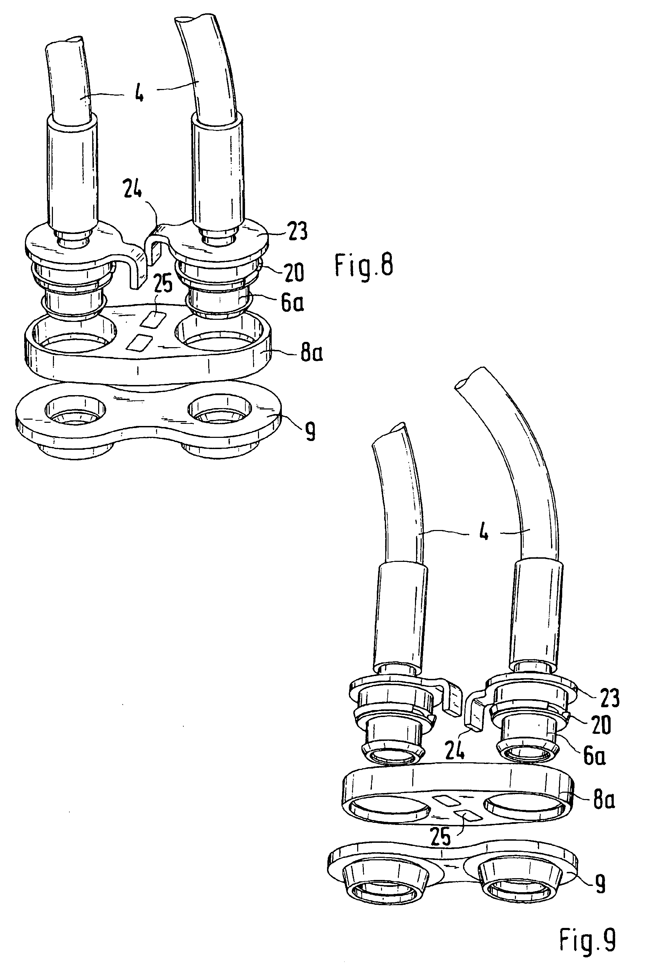

Fig. 8 und Fig. 9 zeigen das zweite Ausführungsbeispiel nochmals im Überblick in einer Explosionsdarstellung.

## Patentansprüche

1. Vorrichtung zur Wanddurchführung von Rohrleitungen, Schläuchen oder elektrischen Kabeln für Kraftfahrzeuge, wobei die Rohrleitungen, Schläuche oder elektrischen Kabel im Bereich der Wanddurchführung jeweils eine Kupplung aufweisen, die Kupplung aus zwei Kupplungshälften (6, 7) besteht und jeweils erste Kupplungshälften (6) in der Vorrichtung zur Wanddurchführung gemeinsam gehalten sind, wobei
- jeweils wenigstens zwei erste Kupplungshälften (6) durch eine Halterung (8) zusammengefasst sind,
- Stopfen (9) zur Aufnahme der ersten Kupplungshälften (6) in Öffnungen (12) einer Wandung (3) angeordnet sind, und
- die ersten Kupplungshälften (6) in den Stopfen (9) gehalten sind, **dadurch gekennzeichnet, dass**
- die Stopfen (9) einen Absatz (17) aufweisen, der mit einem an der ersten Kupplungshälfte (6) vorgesehenen Vorsprung rastend zusammenwirkt.

2. Vorrichtung nach Anspruch 1, **dadurch gekennzeichnet, dass** die Stopfen (9) aus gummielastischem Material bestehen und in Gruppen zusammengefasst sind.

3. Vorrichtung nach Anspruch 1, **dadurch gekennzeichnet, dass** in einer Öffnung (18), die in der Halterung (8) zur Aufnahme einer ersten Kupplungshälfte (6) vorgesehen ist, sowie in der ersten Kupplungshälfte (6) korrespondierende Nuten (19) vorgesehen sind, und in der Nut (19) der ersten Kupplungshälfte (6) ein Sprengring (20) eingelegt ist.

## Claims

1. Apparatus for leading pipes, hoses or electric cables for motor vehicles through walls, with the pipes, hoses or electric cables in each case having a coupling in the region of the wall leadthrough, the coupling comprising two coupling halves (6, 7) and first coupling halves (6) in each case being held jointly in the apparatus for wall leadthrough, with
- in each case at least two first coupling halves (6) being combined by a holder (8),
- stoppers (9) for accommodating the first coupling halves (6) being arranged in openings (12) in a wall (3), and
- the first coupling halves (6) being held in the stoppers (9), **characterized in that**
- the stoppers (9) have a projection (17) which interacts in a latching manner with a protrusion which is provided on the first coupling half (6).

2. Apparatus according to Claim 1, **characterized in that** the stoppers (9) are composed of a rubber-elastic material and are combined to form groups.

3. Apparatus according to Claim 1, **characterized in that** corresponding grooves (19) are provided in an opening (18), which is provided in the holder (8) for accommodating a first coupling half (6), and in the first coupling half (6), and a circlip (20) is inserted in the groove (19) in the first coupling half (6).

## Revendications

1. Dispositif de traversée de paroi pour conduites, tuyaux flexibles ou câbles électriques pour véhicules automobiles, les conduites, tuyaux flexibles ou câbles électriques présentant, dans la région de la traversée de câble à chaque fois un raccord, le raccord se composant de deux moitiés de raccord (6, 7) et à chaque fois des premières moitiés de raccord (6) étant maintenues ensemble dans le dispositif de traversée de paroi,
- à chaque fois au moins deux premières moitiés de raccord (6) étant assemblées par une fixation (8),
- des bouchons (9) pour recevoir les premières moitiés de raccord (6) étant disposés dans des ouvertures (12) d'une paroi (3), et
- les premières moitiés de raccord (6) étant maintenues dans les bouchons (9), **caractérisé en ce que**
- les bouchons (9) présentent un épaulement (17), qui coopère par encliquetage avec une projection faisant saillie sur la première moitié de raccord (6).

2. Dispositif selon la revendication 1, **caractérisé en ce que** les bouchons (9) sont constitués de matériau en plastique élastomère et sont rassemblés en groupes.

3. Dispositif selon la revendication 1, **caractérisé en ce que** des rainures (19) sont prévues dans une ouverture (18) qui est prévue dans la fixation (8) pour recevoir une première moitié de raccord (6), et des rainures correspondantes (19) sont prévues dans la première moitié de raccord (6), et un jonc (20) est incorporé dans la rainure (19) de la première moitié de raccord (6).
